# EUROPÄISCHE PATENTSCHRIFT

(11) **EP 1 020 659 B1**
(45) Veröffentlichungstag und Bekanntmachung des Hinweises auf die Patenterteilung: **03.12.2003**
(21) Anmeldenummer: 00200123.8
(22) Anmeldetag: 13.01.2000
(51) Int. Cl.: F16G 11/04

(54) **Selbsttätige Seilklemme**
Self-acting cable clamp
Serre-câble à auto-coincement

(30) Priorität: 15.01.1999 IT BZ990002
(43) Veröffentlichungstag der Anmeldung: 19.07.2000
(73) Patentinhaber: Czaloun, Giovanni Guntero, 39040 Castelrotto (BZ) (IT)
(72) Erfinder: Czaloun, Giovanni Guntero, 39040 Castelrotto (BZ) (IT)
(74) Vertreter: Faraggiana, Vittorio, Dr. Ing.

(56) Entgegenhaltungen:
- FR-A- 1 498 867
- GB-A- 191 404 244
- US-A- 2 291 903
- US-A- 4 428 100

## Beschreibung

Die vorliegende Erfindung bezieht sich auf eine selbsttätige Seilklemme, beispielsweise für Stahlseile oder Seile aus einem anderen Werkstoff, gemäß dem Oberbegriff des Anspruchs 1.

Es sind zahlreiche Klemmen bekannt, die durch Reibschluss ein Seil erfassen.

Im wesentlichen wird unterschieden zwischen Klemmen, die zum Beispiel über Schraubbolzen einen konstanten Druck auf das Seil ausüben, und automatisch betätigbare Klemmen, bei denen die Spannung auf den Zug des Seils zurückzuführen ist, der durch z.B. keil- oder hebelartige Einrichtungen, in eine auf das Seil ausgeübte Pressung umgewandelt wird.

Wegen der erheblichen auf den Reibschluss zurückzuführenden Beanspruchungen, werden die bis jetzt verwendeten Einrichtungen in den automatisch betätigbaren Klemmen verhältnismäßig aufwendig und schwerbauend.

Im Konzept kann die Klemmwirkung durch ein um das Seil herum geschlossene System oder durch ein seitlich offenes System realisiert werden.

Beim geschlossenen System ist die Beanspruchung verhältnismäßig günstig, da die Klemmkräfte symmetrisch vom oberen Klemmelement auf das untere übertragen werden, jedoch andererseits besteht das Problem, dass das Seil mit seinem freien Ende ins geschlossene System selbst eingefädelt werden muss, eine Notwendigkeit, die oft die Verwendungsmöglichkeiten begrenzt.

Beim seitlich offenen System kann hingegen das Seil an einer beliebigen Stelle eingebracht werden, wobei jedoch ein hohes Biegemoment in der seitlichen Verbindung zwischen den Klemmelementen erzeugt wird, wodurch somit auf schwerere Konstruktionen zurückgegriffen werden muss.

Ein weiterer Nachteil von zahlreichen automatisch zu betätigen Klemmen besteht darin, dass, nachdem einmal die Klemme gespannt wurde, sie nicht mehr einfach geöffnet werden kann, vor allem bei hohen Zugwerten, wo die Öffnung auch durch Hammerschläge begleitet werden muss.

Die Aufgabe der vorliegenden Erfindung liegt darin, die Nachteile des bekannten Standes der Technik zu beseitigen und eine Klemme vorzuschlagen, die einen im wesentlichen leichteren Aufbau besitzt, ein Höchstmaß an Betriebssicherheit aufweist und nach der Verwendung einfach abnehmbar sein soll.

Diese Aufgabe wird durch die Erfindung in einer Klemme mit den Merkmalen gemäß dem Kennzeichen des Anspruches 1 gelöst.

Die vorliegende Erfindung betrifft so eine selbsttätige Klemme, die eine geschlossene Klemmeinheit während des Betriebes vorsieht, jedoch mit der Möglichkeit einer Schnellöffnung um das Seil seitlich einzubringen oder abzunehmen, d.h. ohne die Notwendigkeit den Seilanfang einzufädeln.

Die erfindungsgemäße Klemme erlaubt überdies einen einfachen Auszug des Seils auch nach einer kräftigen Spannung.

Die erfindungsgemäße Klemme sieht im wesentlichen zwei miteinander seitlich über ein scharnierartiges System verbundene Klemmelemente vor. Zur Einbringung des Seils kann das Klemmsystem geöffnet werden, indem einfach der Scharnierstift eines der Scharniere ausgezogen und ein Klemmelement gegenüber dem anderen verschwenkt wird.

Die Spannung nach der Seileinbringung und die Erzeugung der Zugspannung des Seils erfolgt dadurch, dass die Scharnierachse eine Neigung α gegenüber der Seilachse aufweist und die Scharniere - außer einer Drehbewegung - auch eine bestimmte Längsverstellung eines der Klemmelemente gegenüber dem anderen erlauben.

Die durch den Seilzug durch die Neigung a des Scharniers gegebene Längsverstellung eines Klemmelementes gegenüber dem anderen führt auch eine Annäherung der Klemmelemente und damit die Klemmung des dazwischenliegenden Seils.

Weitere Merkmale gehen aus den Ansprüchen und aus der Beschreibung einer bevorzugten Ausführungsform einer in der beigefügten Zeichnung dargestellten Ausführungsform einer erfindungsgemäßen Klemme hervor. Es zeigen,

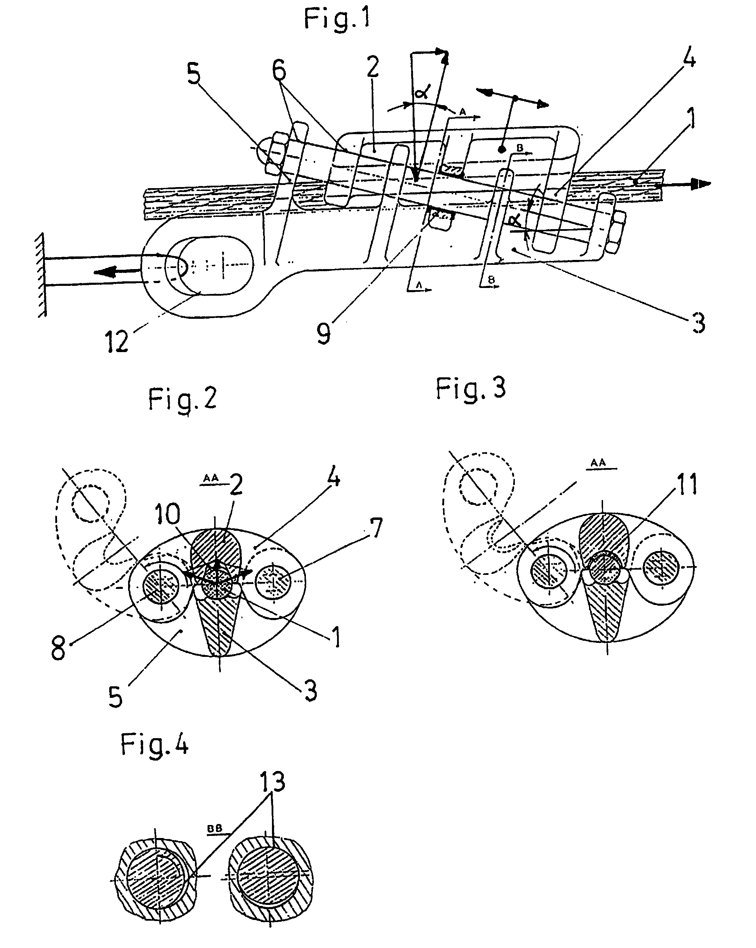

- Figur 1: eine Klemme in Stirnansicht, und
- Figur 2, 3 und 4: Querschnitte.

Seitlich Klemmelemente 2 und 3 verbindende Scharniere sind durch eine Reihe von seitlichen Rippen 4 und 5 mit Bohrungen 6 sowie durch Stifte 7 und 8 gebildet.

Die Rippen 4 und 5 sind mit den entsprechenden Klemmelementen einstückig ausgebildet. Der gleiche Abstand der Rippen ist derart gewählt, dass die vorgesehene Längsverstellung erlaubt wird.

Um die selbsttätige Klemmung der Klemme durch den Zug des Seils sicherzustellen, müssen bestimmte Beziehungen zwischen der Neigung α, dem Reibwert des Seils gegenüber dem oberen Klemmelement 2 und dem Reibwert der Scharnierstifte 7 und 8 gegenüber ihrer Aufnahme mit axialer Verschiebung beachtet werden.

Die verwickelten Kräfte werden herabgesetzt, indem der Reibwert des Seils gegenüber dem oberen Klemmelement 2 erhöht sowie der Reibwert der Stifte der Scharniere 7 gegenüber ihrer Aufnahme herabgesetzt wird.

Um diese Bedingungen zu schaffen, besitzt die Kehle des oberen Klemmelemente bevorzugter Weise einen trapezförmigen Querschnitt 10, der eine Wirkung erzeugt, die einer Erhöhung des Reibwertes gleichkommt, oder die Kehle kann mit einem Werkstoff niedrigen Reibwertes beschichtet sein.

Die Klemme wird über ein Auge 12 verankert, das im unteren Klemmelement 3 vorgesehen ist.

Bei der unter Spannungssetzung verstellt sich, gegeben durch den hohen Reibwert, das obere Klemmelement 2 zusammen mit dem Seil, während eine leichte Relativbewegung zwischen Seil und unterem Klemmelement 3 zustande kommt. Mit dieser Bewegung erfolgt eine Längsverschiebung zwischen den beiden Klemmelemente, die zufolge der Neigung α der Stifte der Scharniere 7 und 8 eine Annäherung zwischen diesen Elementen verursacht, d.h. eine Klemmung des dazwischen liegenden Seils.

Dadurch dass die Klemmkraft dem Zug des Seils einer einwandfrei dimensionierten Klemme proportional ist, kann das Seil nicht verrutschen. Die einmal gespannte Klemme kann sich nicht von alleine öffnen. Um die Öffnung nach abgeschlossenem Zug bequem zu gestalten, weist der Stift des Scharniers 8 leichte Seitenrillen 13 im Bereich der Aufnahme 6 im Scharnier auf.

Durch die Drehung des Stiftes 8 um etwa 90°, nehmen die Rillen 13 eine Stellung ein, die eine leichte Zunahme des Abstandes zwischen den Klemmelementen bewirkt, wobei dadurch die auf die Klemmung zurückzuführenden Belastungen aufgehoben werden. Nach Beseitigung dieser Spannungen, kann die Klemme ohne Kraftaufwand geöffnet werden, d.h. ohne Verwendung von Werkzeugen.

## Patentansprüche

1. Selbsttätige Seilklemme unter Einbringung des Seils (Z) zwischen einem oberen Klemmelement (2) und einem unteren über ein Auge (12) verankertes Klemmelement (3), **dadurch gekennzeichnet, dass** die Verbindung zwischen den Klemmelementen (2, 3) durch zwei seitliche durch Augen (6) und ausziehbare Stifte (7, 8) gebildete Scharniere erfolgt, sowie dadurch, dass die Scharniere unter einem Winkel α gegenüber der Achse des Seils (1) geneigt sind und dass die Scharniere, außer einer Drehbewegung, auch eine Längsbewegung derart erlauben, dass die auf den Zug des Seils zurückzuführende Verschiebung des Elementes (2) in Längsrichtung gegenüber dem Klemmelement (3) auch zu einer Annäherung der Klemmelemente (2, 3) und mit dieser zur Klemmung des dazwischenliegenden Seils (1) führt.

2. Selbsttätige Seilklemme nach Anspruch 1, **dadurch gekennzeichnet, dass** die Augen (6) der Scharniere sich in Rippen (4 bzw. 5) befinden und diese Rippen einstückig mit den Klemmelementen (2 bzw. 3) ausgebildet sind.

3. Selbsttätige Seilklemme nach Anspruch 1, **dadurch gekennzeichnet dass** die im oberen Klemmelement (2) vorgesehene Kehle (10) für das Seil (1) einen trapezförmigen Querschnitt besitzt.

4. Selbsttätige Seilklemme nach Anspruch 1, **dadurch gekennzeichnet, dass** die im oberen Klemmelement (2) vorgesehene Seilkehle (10) mit einem Werkstoff hohen Reibwertes (11) beschichtet ist.

5. Selbsttätige Seilklemme nach Anspruch 1, **dadurch gekennzeichnet, dass** die Aufnahme des Scharnierstiftes des oberen Klemmelementes (2) an Gleitbüchsen erfolgt.

6. Selbsttätige Seilklemme nach Anspruch 1, **dadurch gekennzeichnet, dass** der Scharnierstift (7) im Bereich der Augen (6) des unteren Klemmelementes (3) leicht einseitige Rillen (13) besitzt, die - bei Verschwenkung des Scharnierstiftes (7) um etwa 90° - die Entfernung eines Klemmelementes gegenüber dem anderen und mit dieser die Aufhebung der Klemmspannungen verursachen.

## Claims

1. Automatic cable clamping vice with insertion of the cable (1) between an upper tightening member (2) and a lower tightening member (3) anchored through an eyelet (12) **characterized in that** the connection between the tightening members (2, 3) and takes place through two side hinges made up of eyelets (6) and withdrawable pins (7, 8) and as well as the fact that the hinges are inclined at an angle α with respect to the axis of the cable (1) and that the hinges in addition to the rotary movement also permit longitudinal movement in such a manner that the shifting of the member (2) longitudinally with respect to the member (3) due to cable traction also causes closing of the members (2, 3) and therewith tightening of the interposed cable (1).

2. Automatic vice in accordance with claim 1 wherein the eyelets (6) of the hinges are located in the ribs (4 or 5) and that these ribs form a single body with the tightening members (2 or 3).

3. Automatic vice in accordance with claim 1 wherein the throat (10) of the cable (1) provided in the upper tightening member (2) has a trapezoidal cross section.

4. Automatic vice in accordance with claim 1 wherein the throat (10) of the cable provided in the upper tightening member (2) is covered with material (11) with high friction coefficient.

5. Automatic vice in accordance with claim 1 wherein hinge pin housing in the upper tightening member (2) takes place on sliding bushes.

6. Automatic vice in accordance with claim 1 wherein the pin (7) of the hinge has opposite the eyelets (6) of the lower tightening member (3) slight unilateral grooves (13) which when the pin (7) turns by approximately 90° cause withdrawal of one tightening member with respect to the other and therewith cancellation of the tightening tensions.

## Revendications

1. Serre-câble à auto-coincement, avec insertion du câble (1) entre un élément de serrage supérieur (2) et un élément de serrage inférieur (3) ancré par un oeillet (12), **caractérisé en ce que** la liaison entre les éléments de serrage (2) et (3) a lieu par l'intermédiaire de deux charnières latérales se composant d'oeillets (6) et de broches déboîtables (7) et (8), et **en ce que** les charnières sont inclinées selon un angle a par rapport à l'axe du câble (1) et les charnières, en plus du mouvement rotatoire, permettent également un mouvement longitudinal de telle sorte que le déplacement de l'élément (2) dans le sens longitudinal par rapport à l'élément (3), dû au tirage du câble, cause également le rapprochement des éléments (2) et (3) et avec ce rapprochement le serrage du câble (1) y interposé.

2. Serre-câble à auto-coincement selon la revendication 1, **caractérisé en ce que** les oeillets (6) des charnières se trouvent dans les nervures (4 et respectivement 5) et que ces nervures forment un seul corps avec les éléments de serrage (2 et respectivement 3).

3. Serre-câble à auto-coincement selon la revendication 1, **caractérisé en ce que** la cannelure (10) pour le câble (1) prévue dans l'élément de serrage supérieur (2) a une forme trapézoïdale en coupe.

4. Serre-câble à auto-coincement selon la revendication 1, **caractérisé en ce que** la cannelure (10) pour le câble (1), prévue dans l'élément de serrage supérieur (2) est revêtue de matière (11) ayant un coefficient de frottement élevé.

5. Serre-câble à auto-coincement selon la revendication 1, **caractérisé en ce que** le logement de la broche de la charnière dans l'élément de serrage supérieur (2) a lieu sur des boîtes d'essieu à frottement.

6. Serre-câble à auto-coincement selon la revendication 1, **caractérisé en ce que** la broche de la charnière (7) présente en correspondance avec les oeillets (6) de l'élément de serrage inférieur (3) des rainures unilatérales légères (13) qui, si l'on tourne la broche d'environ 90°, causent l'éloignement d'un élément de serrage par rapport à l'autre et avec cet éloignement l'élimination des tensions de serrage.
